# EUROPÄISCHE PATENTANMELDUNG

(11) **EP 0 972 589 A2**
(43) Veröffentlichungstag der Anmeldung: **19.01.2000**
(21) Anmeldenummer: 99250146.0
(22) Anmeldetag: 04.05.1999
(51) Int. Cl.: B21K 1/16, F16L 13/16

(54) **Verfahren zur Herstellung eines verpressbaren Fittings oder Armatur aus Metall**

(30) Priorität: 17.07.1998 DE 19833769
(71) Anmelder: MANNESMANN Aktiengesellschaft, 40213 Düsseldorf (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft ein Verfahren zur Herstellung eines verpreßbaren Fittings oder Armatur aus Metall zur Bildung einer unlösbaren, dichten Verbindung mit einem Rohr, Armatur oder Fitting aus Metall mit einem den Typ des Fittings oder der Armatur charakterisierenden Bereich, der als ein aus einem metallischen Werkstoff gegossenen Grundkörper ausgebildet und mit einem aus Blech hergestellten standardisierten Anschlußstück stoffschlüssig verbunden ist.

Die Erfindung ist dadurch gekennzeichnet, daß der dem Grundkörper (6) zugewandte Endbereich (13) des Anschlußstückes (1) mit der zur Herstellung des Grundkörpers (6) eingesetzten Metallschmelze in Kontakt gebracht wird.

## Beschreibung

Die Erfindung betrifft ein Verfahren zur Herstellung eines verpreßbaren Fittings oder Armatur aus Metall zur Bildung einer unlösbaren, dichten Verbindung mit einem Rohr, Armatur oder Fitting aus Metall gemäß dem Oberbegriff des Patentanspruches 1.

Die Herstellung eines verpreßbaren Fittings der gattungsmäßigen Art ist in der DE 39 19 496 C1 offenbart. Bei diesem bekannten Verfahren wird der den Typ des Fittings charakterisierende Bereich als Grundkörper gegossen. Wahlweise kann der Grundkörper aus einem metallischen oder nichtmetallischen Werkstoff hergestellt sein. Ein aus Blech hergestelltes standardisiertes verpreßbares Anschlußstück wird über eine Lötnaht, eine Schweißnaht oder über ein Klebemittel stoffschlüssig mit diesem Grundkörper verbunden. Nachteilig bei diesem Verfahren ist, daß das Anbringen einer Löt- oder Schweißnaht aufwendig ist und jede Schweiß- oder Lötnaht auf Dichtheit überprüft werden muß.

Ein anderes Verfahren ist aus der EP 0 343 395 A2 bekannt. Bei diesem Verfahren wird der Fitting oder die Armatur aus Metallguß hergestellt und der Anschlußstutzen, der integraler Bestandteil des Fittings oder der Armatur ist, mechanisch bearbeitet, so daß sich eine genau definierte Wanddicke ergibt, die es erlaubt, den Anschlußstutzen mit einem eingeschobenen Rohr zu verpressen. Außer der Einstellung einer genau definierten Wanddicke ist die Bedingung einzuhalten, daß die Quetschgrenze des Anschlußstutzens höchstens gleich groß ist wie diejenige des Rohres. Nachteilig bei diesem Verfahren ist der Aufwand für die mechanische Bearbeitung und die Beibehaltung der Gußstruktur im Verpreßbereich. Der letztgenannte Punkt führt je nach Gegebenheiten bei der Verpressung zu Anrissen und damit zu Undichtigkeiten.

Aufgabe der Erfindung ist, ein Verfahren zur Herstellung eines verpreßbaren Fittings oder Armatur aus Metall bzw. Metallegierung zur Bildung einer unlösbaren, dichten

Verbindung mit einem Rohr, Armatur oder Fitting aus Metall bzw. Metallegierung anzugeben, das im Vergleich zum bekannten Stand der Technik weniger aufwendig ist und bei dem auf eine Nachkontrolle der Qualität der Verbindung verzichtet werden kann.

Diese Aufgabe wird ausgehend vom Oberbegriff in Verbindung mit den kennzeichnenden Merkmalen des Patentanspruches 1 gelöst. Vorteilhafte Weiterbildungen sind Bestandteil von Unteransprüchen.

Nach der Lehre des Patentes wird der dem Grundkörper zugewandte Endbereich des Anschlußstückes mit der zur Herstellung des Grundkörpers eingesetzten Metallschmelze in Kontakt gebracht. Vorzugsweise wird vor dem Gießen des Grundkörpers das aus Blech hergestellte Anschlußstück in die Gießform eingelegt und somit der als Guß sich bildende Grundkörper stoffschlüssig mit dem Anschlußstück verbunden. Im Verbindungsbereich schmilzt beim Kontakt des Anschlußstückes mit der Schmelze der im Kontakt liegende Teil etwas auf und verbindet sich auf diese Weise stoffschlüssig miteinander. Als Vorteile des Verfahrens sind zu nennen:
- die Ausnutzung des erforderlichen Gießverfahrens zur Herstellung des Grundkörpers als Verbindungstechnik
- Anwendbarkeit des Verfahrens für die im Installationsbereich üblichen Werkstoffe wie C-Stahl, Edelstahl, Kupfer, Messing, Rotguß
- Wegfall der Nachkontrolle der Qualität der Verbindung
- Wegfall einer mechanischen Bearbeitung des Verpreßbereiches
- Ausnutzung der hervorragenden Verpreßbarkeit des aus Blech hergestellten Anschlußstückes

Bei lötbaren Werkstoffen wie Kupfer und Messing kann man als zusätzliche Maßnahme zur Sicherstellung der Dichtheit entweder ein Lötmittel in die Gießform mit eingeben oder unter Ausnutzung der Restwärme des Gußteiles das Lötmittel direkt auf den Verbindungsbereich aufbringen. Das Lötmittel kann ein Lötdraht oder eine Lötpaste sein.

Hinzuweisen ist noch, daß dieses Verfahren unabhängig ist von der geometrischen Form des als Blech hergestellten Anschlußstückes. Dabei spielt es keine Rolle, ob die Schmelze den Endbereich des Anschlußstückes nur von außen oder nur von innen oder gleichzeitig von außen und innen kontaktiert.

In der Zeichnung wird schematisch das erfindungsgemäße Verfahren näher erläutert Es zeigen:
- Fig. 1a: ein aus Blech hergestelltes Anschlußstück
- Fig. 1b: ein aus Guß hergestellter Grundkörper
- Fig. 2: Montagezustand vor dem Gießen
- Fig. 3: ein fertig hergestelltes Übergangsstück

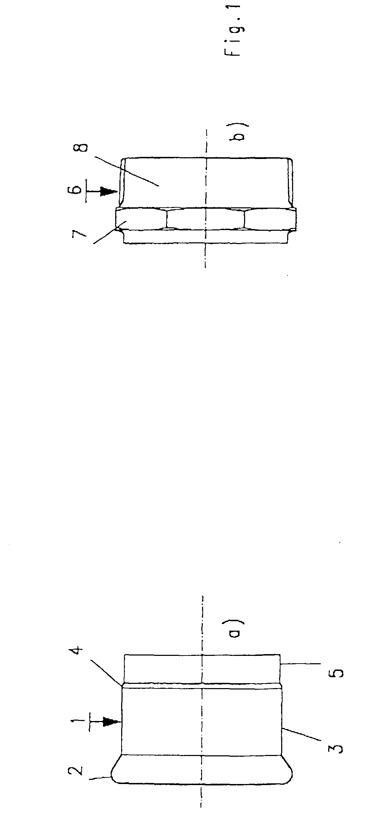

Fig. 1a zeigt ein aus Blech hergestelltes Anschlußstück 1, das in diesem Ausführungsbeispiel am linken Ende einen nach außen sich erstreckenden ringförmigen Wulst 2 zur Aufnahme eines hier nicht dargestellten Dichtringes aufweist An diesen ringförmigen Wulst 2 schließt sich ein zylindrisch ausgebildeter Abschnitt 3 an, der dann mit einem Absatz 4 übergeht in einen - einen kleineren Durchmesser aufweisenden - ebenfalls zylindrisch ausgebildeten Abschnitt 5. Der Absatz 4 dient als Anschlag für den in das Anschlußstück 1 einzuschiebenden Endbereich eines damit zu verbindenden Rohres (hier nicht dargestellt).

Fig. 1b zeigt einen über Guß herzustellenden Grundkörper 2, der dem Fitting das Gepräge gibt. In diesem Beispiel ist der Grundkörper 6 ein Übergangsstück mit einem das Gegenmoment aufnehmenden Mutterteil 7 und mit einem daran anschließenden Abschnitt 8 mit Außengewinde. Der Grundkörper könnte aber auch ein Übergangswinkel, eine Übergangsmuffe, ein Deckenwinkel oder eine Armatur beispielsweise ein Absperrhahn sein. Auch nach dem schon bekannten Verfahren werden die jeweiligen Grundkörper als Gußteile hergestellt.

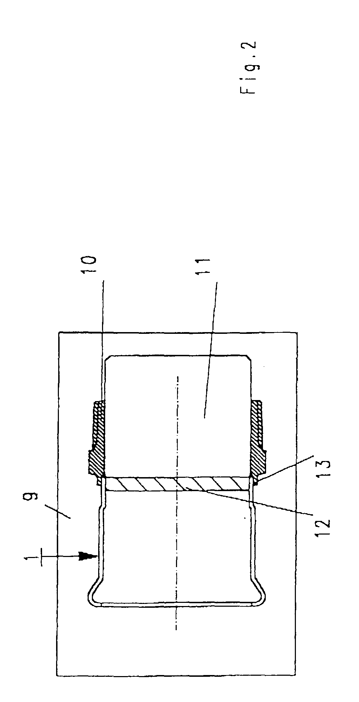

Fig. 2 zeigt eine Möglichkeit, wie man das erfindungsgemäße Verfahren in einfacher Weise anwenden kann. Skizzenhaft angedeutet ist der Unterkasten 9 einer zweiteiligen Gießform. In den Unterkasten 9 eingelegt ist das in Fig. 1a dargestellte aus Blech hergestellte Anschlußstück 1. Rechts daneben erkennt man das in die Form eingedrückte Negativ 10 des zu gießenden Grundkörpers 6 gemäß Fig 1b. Eingelegt ist ein Kern 11, der dann später die Bohrung des Grundkörpers 6 bildet. Die Details, wie Anordnung von Gußkanälen und Entlüftungsbohrungen usw. wurden der Einfachhalt halber hier weggelassen.

Auf der Innenseite des Anschlußstückes 1 ist ein Dichtelement 12 angeordnet, das verhindern soll, daß die in die Gießform einfließende Schmelze in den übrigen Bereich des Anschlußstückes 1 eindringen kann. Für die angestrebte Verbindung zwischen Anschlußstück 1 und Grundkörper 6 kommt der Endbereich 13 des Anschlußstückes 1 mit der Schmelze, mit der der Grundkörper 6 hergestellt wird, in Kontakt.

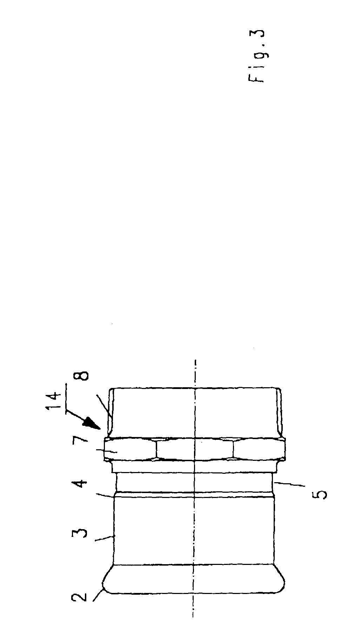

Fig. 3 zeigt das fertigerstellte Übergangsstück 14 mit Außengewinde 8 und Mutter 7 und dem damit stoffschlüssig verbundenen Anschlußstück 1.

## Patentansprüche

1. Verfahren zur Herstellung eines verpreßbaren Fittings oder Armatur aus Metall zur Bildung einer unlösbaren, dichten Verbindung mit einem Rohr, Armatur oder Fitting aus Metall mit einem den Typ des Fittings oder der Armatur charakterisierenden Bereich, der als ein aus einem metallischen Werkstoff gegossenen Grundkörper ausgebildet und mit einem aus Blech hergestellten standardisierten Anschlußstück stoffschlüssig verbunden ist,
dadurch gekennzeichnet,
daß der dem Grundkörper (6) zugewandte Endbereich (13) des Anschlußstückes (1) mit der zur Herstellung des Grundkörpers (6) eingesetzten Metallschmelze in Kontakt gebracht wird.

2. Verfahren nach Anspruch 1,
dadurch gekennzeichnet,
daß vor dem Gießen des Grundkörpers (6) das als Blech hergestellte Anschlußstück (1) in die Gießform (9) eingelegt wird.

3. Verfahren nach Anspruch 1 und 2,
dadurch gekennzeichnet,
daß nur der Endbereich (13) des Anschlußstückes (1) mit der Metallschmelze für den Grundkörper (6) in Kontakt kommt und der übrige Bereich gegenüber der einfließenden Schmelze abgedichtet (12) ist.

4. Verfahren nach einem der Ansprüche 1 bis 3,
dadurch gekennzeichnet,
daß bei Verwendung eines lötbaren Werkstoffes für den Grundkörper (6) im Verbindungsbereich in die Gießform ein Lötmittel eingebracht wird.

5. Verfahren nach einem der Ansprüche 1 bis 3,
dadurch gekennzeichnet,
daß bei Verwendung eines lötbaren Werkstoffes für den Grundkörper (6) nach Herausnahme des Gußteiles aus der Gießform im Verbindungsbereich unter Ausnutzung der Restwärme ein Lötmittel aufgebracht wird.

6. Verfahren nach Anspruch 4 oder 5,
dadurch gekennzeichnet,
daß das Lötmittel ein Lötdraht ist.

7. Verfahren nach Anspruch 4 oder 5,
dadurch gekennzeichnet,
daß das Lötmittel eine Lötpaste ist.
